# EUROPEAN PATENT SPECIFICATION

(11) **EP 3 896 639 B1**
(45) Date of publication and mention of the grant of the patent: **12.11.2025**
(21) Application number: 20169900.6
(22) Date of filing: 16.04.2020
(51) Int. Cl.: G06Q 10/06, B60W 50/00, G06F 11/07, G06F 11/30, G06F 11/32, G06Q 50/40, G08G 1/01, G08G 1/0967, G08G 1/16

(54) **METHODS AND SYSTEMS FOR MANAGING AN AUTOMATED DRIVING SYSTEM OF A VEHICLE**
VERFAHREN UND SYSTEME ZUR VERWALTUNG EINES AUTOMATISIERTEN FAHRSYSTEMS EINES FAHRZEUGS
PROCÉDÉS ET SYSTÈMES DE GESTION D'UN SYSTÈME DE CONDUITE AUTOMATISÉE D'UN VÉHICULE

(43) Date of publication of application: 20.10.2021
(73) Proprietor: Zenuity AB, 413 46 Göteborg (SE)
(72) Inventor: GYLLENHAMMAR, Magnus, 435 43 Pixbo (SE); ZANDÉN, Carl, 437 38 Lindome (SE); KHORSAND VAKILZADEH, Majid, 431 66 Mölndal (SE); FALKOVÉN, Andreas, 431 34 Mölndal (SE)
(74) Representative: Zacco Sweden AB

(56) References cited:
- US-A1- 2019 325 751
- IAN COLWELL: "Runtime Restriction of the Operational Design Domain: A Safety Concept for Automated Vehicles", 1 January 2018 (2018-01-01), XP055742466, Retrieved from the Internet <URL:https://uwspace.uwaterloo.ca/bitstream/handle/10012/13398/Colwell_Ian.pdf?sequence=1&isAllowed=y> [retrieved on 20201021]

## Description

### TECHNICAL FIELD

The present disclosure relates to Automated Driving Systems (ADS) for vehicles, and more specifically, the present disclosure relates to methods and systems for managing an ADS of a vehicle.

### BACKGROUND ART

During these last few years, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control, ACC, collision avoidance system, forward collision warning, etc. - are electronic systems that may aid a vehicle driver while driving. To function as intended, ADAS may rely on inputs from multiple data sources, such as e.g. automotive imaging, LIDAR, radar, image processing, computer vision, and/or in-car networking. An example of such a system is disclosed in US 2019/325751 A1.

Today, development is ongoing in both ADAS as well as Autonomous Driving (AD), within a number of different technical areas within these fields. ADAS and AD will herein be referred to under the common term Automated Driving System (ADS) corresponding to all of the different levels of automation as for example defined by the SAE J3016 levels (0 - 5) of driving automation.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

ADS features as described above are, however, bound to be required to function with a high integrity to provide sufficiently low risk for the vehicle occupant(s) as well as their surrounding environments. Ensuring that the risk is sufficiently low may require intractable amounts of data for statistical proofs, and would, according to an example, take e.g. approximately a hundred vehicles to drive continuously for five centuries, to acquire. There are several approaches to minimize the risk of the ADS features before they are launched onto public roads. An example is disclosed in "Runtime Restriction of the Operational Design Domain: A Safety Concept for Automated Vehicles", by Ian Colwell (2018). However, on top of this, it is generally believed that the ADS features should be monitored once in the field, in order to ensure that they adhere to required safety levels. Further, as the complete sensor setups utilized by various ADS features may generate huge amounts of data, it may be challenging, if not impossible, to send all of that data to a cloud for offline processing and analysis.

### SUMMARY

It is therefore an object of the present disclosure to provide a method for managing an ADS of a ground vehicle, a computer-readable storage medium, a corresponding system, and a vehicle comprising such a system which alleviates all or at least some of the above discussed problems. It is an object of the present disclosure to provide a solution for keeping the ADS of a ground vehicle operating in conditions that it has been developed and verified for and thereby reduce the risk for the vehicle occupant(s) as well as their surrounding environments. The term ground vehicle may in the present context to be understood as a road traffic vehicle such as e.g. cars, busses, trucks, or motorcycles.

These and other objects are achieved by means of a method for managing an ADS of a ground vehicle, a computer-readable storage medium, a corresponding system, and a vehicle as defined in the appended claims. The term exemplary is in the present context to be understood as serving as an instance, example or illustration.

According to a first aspect of the present disclosure, there is provided method for managing an Automated Driving System (ADS) of a ground vehicle. The ADS comprises a scenario identifier module configured to monitor scenarios in a surrounding environment of the ground vehicle within an Operational Design Domain (ODD) of the ADS. Moreover, the ODD is associated with a baseline statistical model indicative of a statistical distribution related to a plurality of scenarios detectable by means of the scenario identifier module. The method comprises obtaining sensor data comprising information about a surrounding environment of the ground vehicle, detecting, by means of the scenario identifier module, a scenario in the surrounding environment based on the obtained sensor data and extracting a set of scenario parameters indicative of the detected scenario. The method further comprises locally updating a set of model parameters of the baseline statistical model based on the extracted set of scenario parameters in order to obtain a locally updated statistical model. The locally updated set of model parameters are indicative of a statistical distribution associated with the detected scenario. Further, the method comprises obtaining, from an external ground vehicle, an externally updated set of model parameters of the baseline statistical model, the externally updated model parameters being indicative of a statistical distribution associated with an externally detected scenario. The method further comprises comparing the baseline statistical model with the locally updated statistical model and with the externally updated set of model parameters, determining if a deviation above a threshold is present based on the comparison, and upon detection of the deviation above the threshold, determining that the baseline statistical model for the ODD is at least temporarily invalid and controlling the ADS in response to the determination that the baseline statistical model is invalid.

Accordingly, a solution for identifying a potential "ODD exit" is presented herein. In more detail, the above proposed method allows for the validity of the ADS to be determined based on both the locally updated statistical model and the externally updated set of model parameters, thereby improving the determination of ADS validity. This further has the advantage of allowing the validity of the ADS to be determined based on data indicative of the detected scenarios of two ground vehicles by only obtaining the externally updated set of model parameters of the baseline statistical model, thereby reducing the amount of data that needs to be transmitted between the ground vehicles.

In more detail, an online scenario identifier module is deployed onto each ADS in order to be able to update the baseline statistical model based on data from its operation conditions and then share such updated models among ADSs being in the proximity of one another in order to build a regional aggregated statistical model. Based on the aggregated statistical model a statistical conclusion can be made and if the traffic situation is indeed outside of the baseline model used for ADS implementation whereby appropriate actions can be taken. This will aid in keeping the ADS operating in conditions that it has been developed and verified for. Further, with the sharing of information between ADSs the risk of inappropriate operation can be minimised, by for example reducing the risk of prolonged exposure to inappropriate operating conditions that could be inferred using the data from a single ADS. Moreover, as mentioned, the utilization of statistical models, which may be used to define the ODD for the ADS, allows for bandwidth-efficient communication as compared to sharing raw sensor data between vehicles.

In accordance with an exemplary embodiment of the present disclosure, the step of obtaining externally updated set of model parameters comprises obtaining an externally updated statistical model comprising the externally updated set of model parameters. Moreover, the method further comprises combining the locally updated statistical model with the externally updated statistical model in order to form a combined statistical model, and wherein the step of comparing comprises the baseline statistical model with combined statistical model. Thus, either the baseline statistical model may be compared with the locally updated statistical model and the externally updated set of model parameters separately, or they may be aggregated/combined and the baseline statistical model is then compared with the aggregated/combined model.

An Operational design domain (ODD) is to be understood as a description of the operating conditions in which an automated or a semi-automated driving system (i.e. AD or ADAS) is designed to function, including, but not limited to, geographic, roadway (e.g. type, surface, geometry, edges and markings), environmental parameters, connectivity, surrounding objects, traffic parameters, and speed limitations.

In reference to the term "statistical model", it may be understood as a description of what the ADS can statistically expect from its environment. In more detail, from the start one can model a set of field data by different segmentation and quantification methods (which herein is referred to as "scenario identification"). In other words, the outcome of the scenario identification is a set of scenario parameters, and the statistical model(s) is/are obtained by modelling the scenarios identified in the field data. Thus, a statistical model may be understood as a mathematical representation of a statistical distribution. In more detail, the statistical model of an environment quantifies what the ADS can expect from its surroundings in a statistical way. In other words, the statistical model provides a probability measure for all scenarios (e.g. overtaking, pedestrian crossings, animal crossings, other road users' behaviours, etc.) that are probable to happen within the environment. Thus, in order to statistically describe an entire operational environment of an ADS, the statistical distributions corresponding to all scenarios may be pooled together in order to form a "global" and statistical distribution.

A statistical model may accordingly be utilized to determine if the conditions and/or requirements of the operational design domain are met, whereby the ADS validity may be determined. Thus, the "baseline statistical model" refers to a "back-office generated" statistical model used for safety assurance of the ADS, while the term "locally updated statistical model" refers to a statistical model obtained by updating the baseline statistical model based on the operating conditions of the ground vehicle. The term safety assurance may in the present context be understood as a verification procedure where one verifies that the ADS is operating in an environment for which it has been designed and verified.

In more detail, the baseline statistical models may feed information into the design process to define what integrity different parts of the ADS needs to operate with, and moreover it may be used to support the definition of the ODD of the ADS. Thus, if the ADS is then implemented to the integrity defined through these statistical models it may be argued that the ADS will be statistically safe. However, in that case it is crucial that the statistical models are also valid at all times during the ADS's operation. When constructing the statistical models, one may need to consider confidence estimates and use conservative numbers for all the different values that goes into the safety argumentation and design of the ADS. This approach, in contrast to the traditional way of posing hard limits or ranges for different values, may allow for a design that solves the real challenge without unnecessary margins.

Accordingly, the present inventors realized that in order for the ADS to be verified safe it is crucial that it only operates within the domain (ODD) for which it has been designed and verified. However, the statistical models may have a different potential problem related to this and that is, in order to understand that the model is no longer valid it might require a lot of samples and not just one occurrence of an unexpected event (i.e. a scenario). Thus, in order to solve this, it was realized that one may deploy a scenario identifier tool in each ADS in order to be able to update the "baseline statistical model" (which is used for safety assurance of the ADS) based on data from the operational ADS. However, data from a single ADS might not be able to reveal deviations from the baseline model, at least not with sufficient confidence. Thus, it is therefore proposed to utilize nearby ADSs of vehicle's in the surrounding environment of the ego-vehicle, to reciprocally share their locally updated statistical models. If these statistical models, from two or more ADSs, collectively show that the baseline statistical model is not valid at this point in time the appropriate actions from each ADS can be taken.

Thus, in accordance with an exemplary embodiment of the present disclosure, the step of controlling the ADS in response to the determination that the baseline statistical model is invalid comprises at least one of generating a signal indicative of a hand-over request at a Human Machine Interface (HMI) of the vehicle, executing a Minimal Risk Condition (MRC) manoeuvre, and inhibiting, at least temporarily, further activation of the ADS a geographical area or region. In reference to the latter, more specifically, one may inhibit, at least temporarily, further activation of the ADS within a geographical area or region which one now no longer can "prove" is in compliance with the requirements of the ODD. These are some examples of "appropriate actions" that may be taken by each ADS in order to handle the potential "ODD exit". An advantage of these is that the ADS of the ground vehicle is configured to perform an action aimed at decreasing traffic risks for the ground vehicle upon determining that the baseline statistical model is invalid.

According to a second aspect of the present disclosure, there is provided a (non-transitory) computer-readable storage medium storing one or more programs configured to be executed by one or more processors of a vehicle control system, the one or more programs comprising instructions for performing the method according to any one of the embodiments disclosed herein. With this aspect of the disclosure, similar advantages and preferred features are present as in the previously discussed first aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further, according to a third aspect of the present disclosure, there is provided a system for managing an Automated Driving System (ADS) of a ground vehicle. The ADS comprises a scenario identifier module configured to monitor scenarios in a surrounding environment of the ground vehicle within an Operational Design Domain (ODD) of the ADS. Moreover, the ODD is associated with a baseline statistical model indicative of a statistical distribution related to a plurality of scenarios detectable by means of the scenario identifier module. The system comprises a memory comprising the baseline statistical model, and control circuitry configured to obtain sensor data comprising information about a surrounding environment of the ground vehicle. The control circuitry is further configured to detect, by means of the scenario identifier module, a scenario in the surrounding environment based on the obtained sensor data and extract a set of scenario parameters indicative of the detected scenario, and to locally update a set of model parameters of the baseline statistical model based on the extracted set of scenario parameters in order to obtain a locally updated statistical model. The locally updated set of model parameters is indicative of a statistical distribution associated with the detected scenario. Moreover, the control circuitry is configured to obtain, from an external ground vehicle, an externally updated set of model parameters of the baseline statistical model, where the externally updated model parameters are indicative of a statistical distribution associated with an externally detected scenario, and to compare the baseline statistical model with the locally updated statistical model and with the externally updated set of model parameters. Moreover, the control circuitry is configured to determine if a deviation above a threshold is present based on the comparison, and upon detection of the deviation above the threshold, determine that the baseline statistical model for the ODD is at least temporarily invalid and generate a signal in order to control the ADS in response to the determination that the baseline statistical model is invalid. With this aspect of the disclosure, similar advantages and preferred features are present as in the previously discussed first aspect of the disclosure.

According to a fourth aspect of the present disclosure there is provided a ground vehicle comprising an Automated Driving System (ADS) comprising a scenario identifier module configured to monitor scenarios in a surrounding environment of the ground vehicle, a perception system comprising at least one sensor configured to monitor a surrounding environment of the ground vehicle, and a localization system configured to monitor a geographical map position of the ground vehicle, and a system for managing the ADS according to any one of the embodiments disclosed herein. With this aspect of the disclosure, similar advantages and preferred features are present as in the previously discussed first aspect of the disclosure.

Further embodiments of the disclosure are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present disclosure will in the following be further clarified with reference to the embodiments described hereinafter.

### BRIEF DESCRIPTION OF THE DRAWINGS

Further objects, features and advantages of embodiments of the disclosure will appear from the following detailed description, reference being made to the accompanying drawings, in which:
Fig. 1 depicts a schematic flowchart representation of method for managing an Automated Driving System (ADS) of a ground vehicle in accordance with an embodiment of the present disclosure.
Fig. 2 depicts a schematic perspective view of a system for managing an Automated Driving System of a ground vehicle in accordance with an embodiment of the present disclosure.
Fig. 3 depicts a schematic side-view of a ground vehicle comprising a system for managing an Automated Driving System of a ground vehicle in accordance with an embodiment of the present disclosure.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

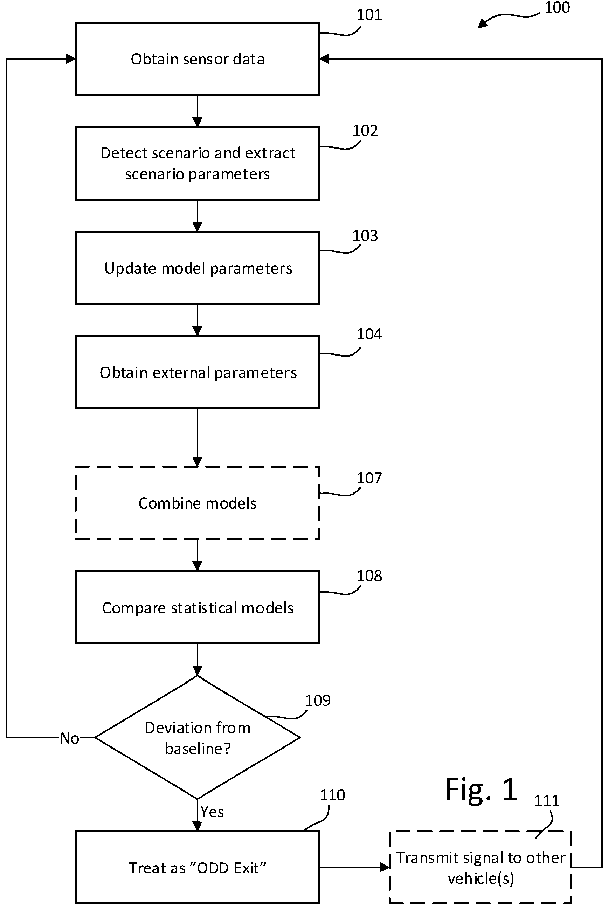

Fig. 1 is a schematic flow chart representation of a method 100 for managing an Automated Driving System (ADS) of a ground vehicle. The ADS is preferably, but not necessarily, an ADS of level 3 or higher according to the SAE J3016 levels of driving automation, such as for example a highway pilot feature, a traffic jam pilot feature, or the like. Further, the ADS comprises a scenario identifier module configured to monitor scenarios in a surrounding environment of the ground vehicle within an Operational Design Domain (ODD) of the ADS. The ODD is associated with a baseline statistical model indicative of a statistical distribution related to a plurality of scenarios occurring in the operating environment of the ground vehicle.

Herein, the term ADS or autonomous driving feature may refer to any arbitrary ADS, ADAS or autonomous driving feature, e.g. as already known in the art and/or yet to be developed, with the novel addition of a scenario identifier module which may be an integrated part of the ADS or a peripheral system/module/feature deployed in the vehicle.

In more detail, an online scenario identifier module is deployed onto the ADS of each vehicle in order to be able to locally update the baseline statistical model based on data from its operation conditions and then share such locally updated statistical models with other vehicles in order to verify the validity of the baseline statistical model. The locally updated statistical model parameters may be sent upon request or upon detection of proximity of another ADS-equipped vehicle.

An Operational design domain (ODD) is to be understood as a description of the operating domains in which an automated or a semi-automated driving system (i.e. AD or ADAS) is designed to function, including, but not limited to, geographic, roadway (e.g. type, surface, geometry, edges and markings), environmental parameters, connectivity, surrounding objects, traffic parameters, and speed limitations. Accordingly, a statistical model may be understood as a mathematical representation of a statistical distribution. In more detail, the statistical model associated with the ODD quantifies what the ADS can expect from its surroundings in a statistical way. In other words, the statistical model provides a probability measure for all scenarios (e.g. overtaking, pedestrian crossings, animal crossings, other road users' behaviours, etc.) that are probable to happen within the operational environment of the ADS. Thus, in order to statistically describe the operational environment of the ADS, the statistical distributions corresponding to all scenarios may be pooled together in order to form a "global" and statistical distribution. The statistical model may for example have a hierarchical structure.

The method comprises obtaining 101 sensor data comprising information about the surrounding environment of the ground vehicle. The sensor data may for example be obtained 101 from a perception system and/or a localization system of the vehicle. A perception system is in the present context to be understood as a system responsible for acquiring raw sensor data from on sensors such as cameras, LIDARs and RADARs, ultrasonic sensors, and converting this raw data into scene understanding. Naturally, the sensor data may be received directly from one or more suitable sensors (such as e.g. cameras, LIDAR sensors, radars, ultrasonic sensors, etc.). The localization system may for example be in the form of a Global Navigation Satellite System (GNSS) such as e.g. a GPS unit. The term obtaining is herein to be interpreted broadly and encompasses receiving, retrieving, collecting, acquiring, and so forth.

Further, the method 100 comprises detecting 102, by means of the scenario identifier module, a scenario in the surrounding environment based on the obtained sensor data and extracting a set of scenario parameters indicative of the detected scenario. In more detail, while driving, the ADS is exposed to a multitude of different scenarios and situations. Having a detailed understanding of these is advantageous in order to be able to construct a safe yet performant self-driving system. One way of achieving such an understanding is by creating "models" of the environment. These "models" can be created using a system that is able to characterise the events and scenarios around the ADS into a "scenario model" and further measure and quantify them. This system is herein referred to as a scenario identifier module whose output is not only the identified but also the quantified scenarios. Quantified scenarios could comprise everything from trajectories of surrounding traffic to the amount of rain or different road characteristics.

In one example situation, the scenario may be an external vehicle overtaking the ego-vehicle. Accordingly, the scenario identifier module is configured to detect this scenario and to extract a set of scenario parameters indicative of this scenario. For this example situation the set of scenario parameter may be an initial position of the external vehicle relative to the ego-vehicle, an initial speed of the vehicle, a trajectory of the external vehicle, a road geometry, road conditions, weather conditions, and so forth. Moreover, the scenario identifier module may further be operatively connected to a memory device acting as a buffer that records and stores a set of states over time based on the obtained sensor data. Accordingly, the scenario identifier module may be configured to use the stored set of states in order to "detect" the scenarios and generate the scenario parameters. In other words, the buffer is used as input to the scenario identifier module in order to identify the entire evolution of a scenario once the whole scenario has been "experienced". In other words, the buffer comprising the "current" states over time are post-processed after the entire scenario/event has evolved. Thus, the scenario identifier module may be configured to generate the scenario parameters after the actual scenario has occurred in order to identify the actual scenario once it has happened. Thus, by having a buffer of the "observations" in the surrounding environment, the scenario identifier module may be configured to analyse the buffer during operation of the vehicle in order to classify and quantify the scenarios.

Further, the method comprises, locally updating 103 a set of model parameters of the baseline statistical model based on the extracted set of scenario parameters in order to obtain a locally updated statistical model, the locally updated set of model parameters being indicative of a statistical distribution associated with the detected scenario. Accordingly, the locally updated statistical model may comprise at least part of the baseline statistical model updated by said set of model parameters.

A "statistical model" is accordingly utilized to determine if the conditions and/or requirements of the operational design domain are met, whereby the ADS "operational validity" may be determined. Thus, the "baseline statistical model" refers to a centrally generated and managed statistical model used for safety assurance of the ADS, while the term "locally updated statistical model" refers to a statistical model obtained by updating 103 the baseline statistical model based on the operating conditions of the ground vehicle. The term safety assurance may in the present context be understood as a verification procedure where one verifies that the ADS is operating in an environment for which it has been designed and verified, i.e. that it complies with the requirements of the ODD.

Moving on, the method 100 further comprises obtaining 104, from an external ground vehicle, an externally updated set of model parameters. The externally updated model parameters being indicative of a statistical distribution associated with an externally detected scenario. In some examples, the ground vehicle and the external ground vehicle are in the same traffic situation. In some examples, the external ground vehicle comprises an ADS comprising a scenario identifier module configured to monitor and detect scenarios in a surrounding environment of the external ground vehicle similar to the ego-vehicle.

Moreover, the obtained externally updated set of model parameters may comprise the number of samples used to generate the externally updated set of model parameters. In some examples, the number of samples used to generate the externally updated set of model relates to a number of time units of sensor measurements. In some examples, the number of samples used to generate the externally updated set of model parameters relates to a number of detected scenarios.

Further, the method 100 comprises comparing 108 the baseline statistical model with the locally updated statistical model and with the externally updated set of model parameters. The method 100 may comprise a step of combining 107 the locally updated statistical model with the externally updated set of model parameters and then comparing the combined model with the baseline statistical model. Thus, either the baseline statistical model may be compared with the locally updated statistical model and the externally updated set of parameters separately, or they may be aggregated/combined and the baseline statistical model is then compared with the aggregated/combined model.

Then, a check is performed in order to determine 109 whether or not a deviation above a threshold is present based on the comparison 108, and upon detection of the deviation above the threshold, the method 100 comprises determining 110 that the baseline statistical model for the ODD is at least temporarily invalid and controlling the ADS in response to the determination that the baseline statistical model is invalid.

The controlling of the ADS in response to the determination that the baseline statistical model is invalid may comprise at least one of:
- Generating a signal indicative of a hand-over request at a Human Machine Interface, HMI, of the ground vehicle.
- Executing a Minimal Risk Condition (MRC) manoeuvre.
- Inhibiting, at least temporarily, further activation of the ADS within a geographical area/region where one now no longer can "prove" is within the ODD.

It should be noted that taking care of a potential ODD exit (as it is called) should be inherent in the design of the ADS and not something new that is proposed in the present disclosure, but the instead the present disclosure pertains to the identification of such an "ODD exit". Thus, the skilled person readily realizes how such features and functions are implemented without further details described herein.

Further, the method 100 may comprise transmitting 111 a signal indicative of the determined deviation above the threshold to at least one external vehicle, or transmitting 111 a signal indicative of the determination that the baseline statistical model associated with the ODD of the ADS is at least temporarily invalid to at least one external vehicle.

Moreover, in some embodiments, in addition to communicating the local statistical models of each ADS, each identified scenario sample could be communicated reciprocally. In other words, the detected and extracted 102 set of scenario parameters may be communicated to nearby vehicles or to a central entity. In such a case it might be possible to discern the potential risks in more detail in each vehicle or by a central entity.

In summary if the ADS of the ego-vehicle encounters another ADS vehicle, the statistical models that have been inferred locally in each ADS can be shared in between the two vehicles. The new information can then be used in conjunction with the already known information to assess whether the statistical environmental model (baseline statistical model) is still valid. The comparison with the (internal) statistical model and with the identified and received one (i.e. the external) can determine if the baseline statistical model is indeed valid at this time. If that is not the case the appropriate actions may be taken to minimise the potential impact. Moreover, if the reality (at this time) is found to violate the baseline statistical model, this may further be communicated to both a central "cloud" entity as well as to any other nearby vehicles.

Moreover, in defining the automated driving system (ADS) it may be crucial to have a good understanding of the challenge that it will face when operating. Such models can be either based on physical limits, idealistic rules or statistical models of the environment. Where the physical models will ensure absolute safety, they will likely yield an ADS that will remain at standstill and the "rule-based" approach risk having omitted cases that are indeed occurring during operations of the ADS and thus might pose considerable safety risk.

It was however realized by the present inventors that the statistical models on the other hand provides a good means to create a performant yet safe ADS. If these statistical models are used in the safety argumentation of the ADS as well as being a foundation for the design and implementation of the ADS, it is crucial that they are indeed correct. In the following, this model used as the foundation for the design and implementation of the ADS is referred to as the baseline statistical model. Moreover, the statistical model will allow the ADS to be developed with sufficient integrities in different parts of the system solution, each ensuring that, given the statistics, the ADS will be safe according to some safety norm. However, if such an approach is deployed it is paramount that each vehicle is able to detect any local deviations from the baseline model. However, one of drawbacks of using statistical models is that one may need many data points to be able to detect changes in the baseline statistical model. For instance, one single measurement point in the tail of statistical models, a so-called rare event, is not enough to disqualify the baseline model since it might just be an outlier. Thus, if a single ADS experience something that is statistically unlikely according to the model used for the safety argumentation it cannot determine if the model is wrong or if it was just a very unlikely event.

Accordingly, by further using nearby vehicles' ADSs to reciprocally share their locally updated statistical models. If the statistical models, from the two ADS, collectively show that the baseline statistical model is not valid at this point in time the appropriate actions from each ADS can be taken. As mentioned, the utilization of statistical models allows for a harmonized and efficient means to use the same framework both design-time and run-time, i.e. both for defining the ODD for the ADS as well as in order to assert that the ADS is operating in an environment fulfilling the ODD. Moreover, by using statistical models, a computationally efficient and bandwidth efficient means for sharing crucial information between ADS equipped vehicles is provided.

Moreover, it should be noted that the statistical model may comprise information about only a small subset of (geographical) areas of all of the (geographical) areas of the ADS's operational environment. More specifically, the statistical model comprises information about the entire operational environment defined by the ODD of the ADS. However, due to its (possibly hierarchical) structure, one may extract information of only a small subset of areas of all of areas of the operational environment of the ADS. Thus the inhibition might not be of the ADS in the all of the areas, just in the parts where the (now updated) statistical model indicates that the operating environment is no longer fulfilling the ODD. In more detail, the ODD may be construed as a "static" (defined in design-time) set of conditions/requirements whereas the statistical model with its statistical distribution is used to judge where these conditions are met at specific geographical areas. So, one might have one statistical distribution or even a model for a first geographical area or a first road type, and another model/distribution for a second geographical area or a second road type. An alternative way of viewing this is that the statistical model is further indicative of both time (of day) as well as geographic position. Accordingly, the outcome from the model being judged to be outside the ODD (i.e. the updated model indicating a deviation from the ODD requirements) may thus only be something that affects the time and geographic areas where that exceedance happens. Therefore, there is no need to inhibit in all of the areas of the ADS operational environment, but it is sufficient to inhibit in the places where the statistical model indicates that the conditions of the ODD are not fulfilled. An operational environment of the ADS may be understood as all of the environments that the ADS may operate in while an operating environment is a current environment that the ADS is operating in (i.e. a subset of the entire operational environment).

Executable instructions for performing these functions are, optionally, included in a non-transitory computer-readable storage medium or other computer program product configured for execution by one or more processors.

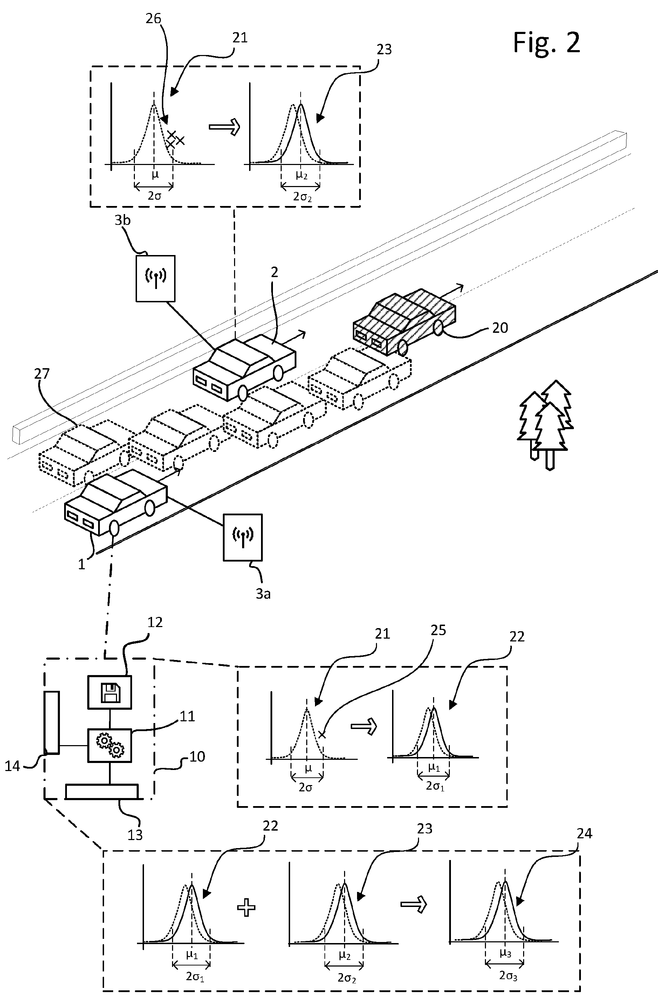

The general concepts and preferred features will be now be discussed in reference to an example scenario illustrated in Fig. 2, where Fig. 2 is a schematic perspective view of a vehicle 1 having a system 10 for managing an Automated Driving System (ADS) of the vehicle 1 in accordance with an embodiment of the present disclosure. The ego-vehicle 1 is traveling on a controlled access dual carriageway, i.e. a motorway or a freeway, and the ADS may for example be in the form of a highway pilot. Moreover, the ADS comprises a scenario identifier module configured to monitor scenarios in a surrounding environment of the ego-vehicle 1 within an operational environment of the ADS, wherein the ODD is associated with a baseline statistical model indicative of a statistical distribution related to a plurality of scenarios for the ODD. The system 10 comprises one or more processors 11, a memory 12, a sensor interface 13 and a communication interface 14, and any other conventional components/functions required for performing the method disclosed herein.

One such statistical distribution of the baseline model is represented by the broken line normal distribution, denoted by reference numeral 21, which in the following will be referred to as the "baseline statistical model". As the skilled reader readily understands the baseline statistical model may be fitted to and be indicative of a plurality of such and/or other statistical distributions indicative of various statistical probabilities of environmental scenarios associated with the current environment of the vehicle 1. Furthermore, other probability distributions than normal distributions may be included in the baseline statistical model, the normal distribution depicted in the example embodiment illustrated in Fig. 2 is used to elucidate the teachings proposed herein in a clear and concise manner.

Moving on, the system 10 comprises a memory 12 having the baseline statistical model stored therein. Generally speaking, a computer-accessible medium 12 may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

As the ego-vehicle 1 is traveling on the freeway, a scenario is detected by means of the scenario identifier module of the ADS of the ego-vehicle 1. The scenario here being an erratic vehicle 20 swerving through the lanes at high speed (e.g. as a consequence of an illegal street race on the freeway). In more detail, the scenario identifier module is configured to detect and extract a set of scenario parameters indicative of the detected scenario, i.e. to quantify the scenario. For example, the scenario parameters may comprise an "initial" position of the target vehicle 20, a trajectory of the target vehicle (indicated by the broken-line vehicles), lane changes on the target vehicle 20, an average speed of the target vehicle, current traffic rules, positions of other vehicles 2 relative to the target vehicle 20, geographical position of the ego-vehicle 1, signage in the surrounding environment, road surface texture, weather parameters, and so forth.

The quantified scenario, i.e. the extracted scenario parameters are then used to update a set of model parameters, here in the form of a mean value (or expectance value) µ and a standard deviation value σ. In more detail, the extracted scenario parameters result in a statistical data point 25 in the statistical distribution (or in one of the sub-distributions forming the "global" statistical distribution) of the baseline statistical model 21. Accordingly, the set of model parameters of the baseline statistical model 21 are locally updated, i.e. the associated statistical distribution for the detected scenario, is locally updated based on the extracted set of scenario parameters in order to obtain a locally updated statistical model 22. The locally updated statistical model 22 has a statistical distribution defined by the parameters µ₁ and σ₁. Moreover, the locally updated statistical model 22 is updated based on one measurement sample 25 in the depicted example embodiment.

Further, the ego-vehicle 1 obtains, from an external ground vehicle 2, an externally updated set of model parameters 23 of the baseline statistical model 21. The baseline externally updated model parameters (or the externally updated statistical model) 23 is indicative of a statistical distribution associated with the detected scenario, here represented by a mean value µ₂ and a standard deviation value σ₂. Moreover, the externally updated set of model parameters comprise a number of samples 26 used to generate the externally updated set of model parameters 23.

In the illustrated example the external vehicle 2 has attained three measurements samples 26 in order to generate the externally updated model parameters. This may for example be the case when this particular statistical distribution is associated with this particular road portion, geographical location, and/or the specific time of day, and the external vehicle 2 has had more "running time" under these constraints. In more detail, if one assumes that the external vehicle 2 has been driving along this specific road portion at this time of day to a larger extent than the ego-vehicle 1, then the external vehicle may have a more accurate statistical representation of this particular scenario at this road portion. This will however be reflected in the obtained externally updated set of model parameters 23.

It should be noted that the ego-vehicle 1 may obtain the "full" externally updated statistical model including any other updates performed "locally" by the external vehicle 2. This externally updated statistical model may accordingly include another statistical distribution related to other scenarios detected by the external vehicle 2. This other statistical distribution may accordingly be used by the ego-vehicle 1 to increase the integrity of its own "locally updated statistical model" by including scenarios that may not have been "detected" by the ego-vehicle 1 but still be of relevance for the operation of the ADS of the ego-vehicle 1.

Next, the two updated statistical models 22, 23 are combined (potentially generating new model parameters µ₃σ₃) and compared with the baseline statistical model in order to determine if there is a deviation above a threshold present. As indicated in the drawing, the mean value µ₃ has shifted as compared to the mean value µ of the baseline statistical model 21. If this shift of the mean value is above a predefined threshold, it is determined that the baseline statistical model for the ODD of the ADS is at least temporarily invalid, and the ADS is controlled accordingly in response to this determination.

In more detail, if the deviation is above the threshold, then the situation is treated as an "ODD exit" and responsive measures may accordingly be taken by the ego-vehicle 1 (e.g. handover request to the driver, MRC execution or the like).

Further, as previously mentioned, the "baseline statistical model" 21 may be construed as a statistical model that is indicative of a statistical distribution that quantify the world around the vehicles, which in turn are used to assert that a particular region (geographical region, road portion, etc.) fulfils the conditions of the ODD. Thus, even if the illustrated example is simplified by using normal distributions of one single variable, the working principles of the subject-matter of the disclosure are elucidated. In more detail, the statistical model used to describe the world around the vehicle, and what it can "expect" from its surroundings, may have several parameters and be more complex than the illustrated embodiment.

In other words, the statistical models as used herein indicate the probabilities of certain scenarios "happening" at particular geographical regions, and by locally updating these and sharing them reciprocally between vehicles 1, 2, one can readily detect deviations from the baseline statistical model 21 (which is used for safety assurance of the ADS) at specific regions and/or at specific times during the day/week, and so forth. The geographical data and temporal data is inherently incorporated in the "statistical models". For example, the baseline statistical model may have one general statistical distribution associated with the depicted scenario (referred to as a "aggressive cut-in scenario") for this geographical location, another statistical distribution indicative of how the "aggressive cut-in scenario" is distributed over a day, another statistical distribution indicative of how the "aggressive cut-in scenario is distributed over a week day, and so forth. Alternatively, all of these geographical and temporal parameters may be indicative in one statistical distribution associated with the "aggressive cut-in scenario" by extending the number of dimensions of the function (which may be defining the model).

Moreover, assuming that the single sample 25 that generated the locally updated statistical model 22 would not have resulted in a deviation above a threshold from the baseline statistical model, the illustrated example further emphasises the advantage of the vehicle-to-vehicle (V2V) shared statistical models. In more detail, by obtaining the externally updated statistical model 23 the ego-vehicle 1 was provided with the necessary statistical data to conclude that the baseline statistical model is (at least temporarily) invalid for this particular geographical location or at this time of day for the particular geographical location, whereby appropriate measures could be taken and safety of the ADS could be better assured. More specifically, the conclusion that the baseline statistical model is invalid could minimise the risk of exposing the ADS to situations or scenarios that it has not yet been designed and verified for.

The illustrated scenario in Fig. 2 is merely one of several examples that can be used to elucidate the concepts disclosed herein. Another example would be a traffic-jam scenario, where a particular geographical area has exhibited a high amount of pedestrians crossing traffic illegally (i.e. jaywalking). This increase in the amount of "jaywalking" scenarios would then be indicated in the statistical distribution associated with that geographical area whereby the ADS-equipped vehicles could inhibit activation of a traffic jam pilot in that geographical area assuming that the increased amount of jaywalking scenarios resulted in a deviation from the baseline statistical model above a threshold. Another example scenario would be a number of ADS-equipped vehicles detecting an increased number of wild-life (e.g. deer, wild boar, bears, etc.) crossings at a particular road portion, resulting in a statistical anomaly deviating from the baseline statistical model.

In more detail, the vehicle 1 may be connected to external network(s) 20 via for instance a wireless link (e.g. for receiving/transmitting data). The same or some other wireless link may be used to communicate with other vehicles 2 in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

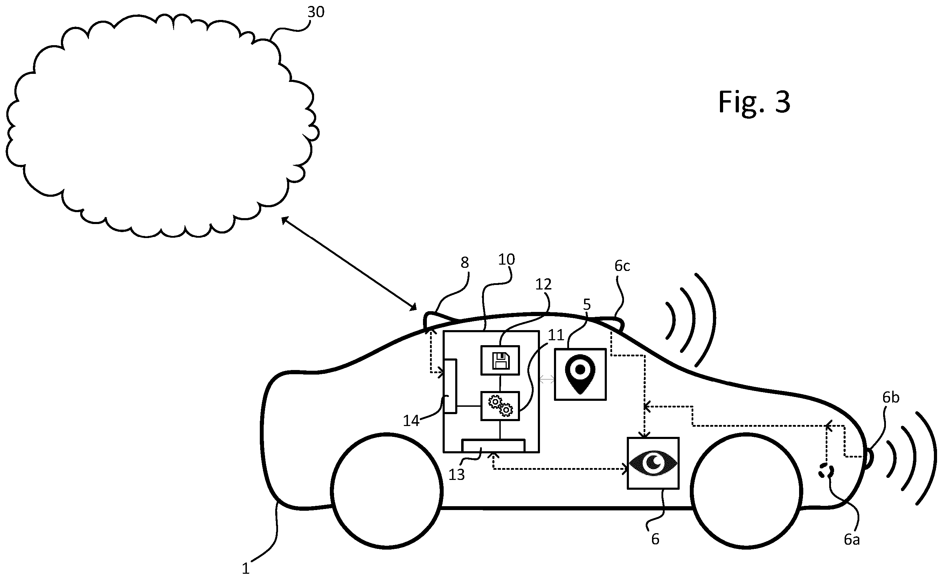

Further, Fig. 3 is a schematic side view of a vehicle 1 comprising a control system 10 for managing an Automated Driving System (ADS) of the vehicle 1. The ADS comprises a scenario identifier module configured to monitor scenarios in a surrounding environment of the ego-vehicle 1 within an operational environment of the ADS, wherein the ADS is configured for an ODD that is associated with a baseline statistical model indicative of a statistical distribution related to a plurality of scenarios for operational environment of the ADS. The vehicle 1 further comprises a perception system 6 and a localization system 5. A perception system 6 is in the present context to be understood as a system responsible for acquiring raw sensor data from on-board sensors 6a, 6b, 6c such as cameras, LIDARs and RADARs, ultrasonic sensors, and converting this raw data into scene understanding. The localization system 5 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy.

In more detail, the perception system 6 may refer to any commonly known system and/or functionality, e.g. comprised in one or more electronic control modules and/or nodes of the vehicle 1, adapted and/or configured to interpret sensory information - relevant for driving of the vehicle 1 - to identify e.g. obstacles, vehicle lanes, relevant signage, appropriate navigation paths etc. The exemplified perception system 6 may thus be adapted to rely on and obtain inputs from multiple data sources, such as automotive imaging, image processing, computer vision, and/or in-car networking, etc., in combination with sensory information. Such exemplifying sensory information may for instance be derived from one or more optional surrounding detecting sensors 6a-c comprised in and/or provided on-board the vehicle 1. The surrounding detecting sensors 6a-c may be represented by any arbitrary sensors adapted to sense and/or perceive the vehicle's 1 surroundings and/or whereabouts, and may e.g. refer to one or a combination of one or more of radar, LIDAR, sonar, camera, navigation system e.g. GPS, odometer and/or inertial measurement units.

The system 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for managing an ADS of the vehicle 1 according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuitry 11 is configured to detect, by means of the scenario identifier module, a scenario in the surrounding environment based on the obtained sensor data and extract a set of scenario parameters indicative of the detected scenario, and to locally update a set of model parameters of the baseline statistical model based on the extracted set of scenario parameters in order to obtain a locally updated statistical model. The locally updated set of model parameters is indicative of a statistical distribution associated with the detected scenario. Moreover, the control circuitry 11 is configured to obtain, from an external ground vehicle, an externally updated set of model parameters of the baseline statistical model, where the externally updated model parameters are indicative of a statistical distribution associated with an externally detected scenario, and to compare the baseline statistical model with the locally updated statistical model and with the externally updated set of model parameters. Moreover, the control circuitry 11 is configured to determine if a deviation above a threshold is present based on the comparison, and upon detection of the deviation above the threshold, determine that the baseline statistical model for the ODD is at least temporarily invalid and generate a signal in order to control the ADS in response to the determination that the baseline statistical model is invalid.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 13 may also provide the possibility to acquire sensor data directly or via dedicated sensor control circuitry 6 in the vehicle. The communication/antenna interface 14 may further provide the possibility to send output to a remote location (e.g. remote operator or control centre) by means of the antenna 8 via an external network 30. Moreover, some sensors in the vehicle may communicate with the control system 10 using a local network setup, such as CAN bus, I2C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, the locally updated set of model parameters as well as the externally updated set of model parameters may be sent to an external system and that system performs the steps to compare the models with the baseline statistical model and sends the result back to the vehicle. The different features and steps of the embodiments may be combined in other combinations than those described.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the disclosure may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals indicative of the externally updated set of model parameters and the generation of the locally updated statistical model may be interchanged based on a specific realization. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present disclosure. Other solutions, uses, objectives, and functions within the scope of the disclosure as claimed in the below described patent embodiments should be apparent for the person skilled in the art.

## Claims

1. A method (100) for managing an Automated Driving System, ADS, of a ground vehicle, wherein the ADS comprises a scenario identifier module configured to monitor scenarios in a surrounding environment of the ground vehicle within an Operational Design Domain, ODD, of the ADS, wherein the ODD is associated with a baseline statistical model indicative of a statistical distribution related to a plurality of scenarios detectable by means of the scenario identifier module, the method comprising:
obtaining (101) sensor data comprising information about a surrounding environment of the ground vehicle;
detecting (102), by means of the scenario identifier module, a scenario in the surrounding environment based on the obtained sensor data and extracting a set of scenario parameters indicative of the detected scenario;
locally updating (103) a set of model parameters of the baseline statistical model based on the extracted set of scenario parameters in order to obtain a locally updated statistical model, the locally updated set of model parameters being indicative of a statistical distribution associated with the detected scenario;
obtaining (104), from an external ground vehicle, an externally updated set of model parameters of the baseline statistical model, the externally updated model parameters being indicative of a statistical distribution associated with an externally detected scenario;
comparing (108) the baseline statistical model with the locally updated statistical model and with the externally updated set of model parameters;
determining (109) if a deviation above a threshold is present based on the comparison; and
upon determining of the deviation above the threshold, determining (110) that the baseline statistical model for the ODD is at least temporarily invalid and controlling the ADS in response to the determination that the baseline statistical model is invalid.

2. The method (100) according to claim 1, wherein the step of obtaining externally updated set of model parameters comprises obtaining an externally updated statistical model comprising the externally updated set of model parameters;
wherein the method further comprises:
combining (107) the locally updated statistical model with the externally updated statistical model in order to form a combined statistical model; and
wherein the step of comparing comprises the baseline statistical model with combined statistical model.

3. The method (100) according to any one of the preceding claims, wherein the obtained externally updated set of model parameters comprise a number of samples used to generate the externally updated set of model parameters.

4. The method (100) according to claim any one of the preceding claims, further comprising:
transmitting (111) a signal indicative of the locally updated set of model parameters to at least one external vehicle.

5. The method (100) according to any one of the preceding claims, further comprising:
transmitting (111) a signal indicative of the determined deviation above the threshold to at least one external vehicle; or
transmitting (111) a signal indicative of the determination that the baseline statistical model for the ODD is at least temporarily invalid to at least one external vehicle.

6. The method (100) according to any one of the preceding claims, wherein the controlling the ADS in response to the determination that the baseline statistical model is invalid comprises at least one of:
generating a signal indicative of a hand-over request at a Human Machine Interface, HMI, of the ground vehicle;
executing a Minimal Risk Condition, MRC, manoeuvre; and
inhibiting, at least temporarily, further activation of the ADS within a geographical area comprised in the ODD.

7. A computer-readable storage medium storing one or more programs configured to be executed by one or more processors of a vehicle control system, the one or more programs comprising instructions for performing the method according to any one of the preceding claims.

8. A system (10) for managing an Automated Driving System, ADS, of a ground vehicle (1), wherein the ADS comprises a scenario identifier module configured to monitor scenarios in a surrounding environment of the ground vehicle within an Operational Design Domain, ODD, of the ADS, wherein the ODD is associated with a baseline statistical model (21) indicative of a statistical distribution related to a plurality of scenarios detectable by means of the scenario identifier module, the system comprising:
a memory (12) comprising the baseline statistical model;
control circuitry (11) configured to:
obtain sensor data comprising information about a surrounding environment of the ground vehicle (1);
detect, by means of the scenario identifier module, a scenario in the surrounding environment based on the obtained sensor data and extract a set of scenario parameters indicative of the detected scenario;
locally update a set of model parameters of the baseline statistical model based on the extracted set of scenario parameters in order to obtain a locally updated statistical model (22), the locally updated set of model parameters being indicative of a statistical distribution associated with the detected scenario;
obtain, from an external ground vehicle (2), an externally updated set of model parameters of the baseline statistical model, the externally updated model parameters being indicative of a statistical distribution associated with an externally detected scenario;
compare the baseline statistical model (21) with the locally updated statistical model (22) and with the externally updated set of model parameters;
determine if a deviation above a threshold is present based on the comparison; and
upon detection of the deviation above the threshold, determine that the baseline statistical model (21) for the ODD is at least temporarily invalid and generate a signal in order to control the ADS in response to the determination that the baseline statistical model is invalid.

9. The system (10) according to claim 8, wherein the control circuitry (11) is configured to obtain an externally updated statistical model (23) comprising the externally updated set of model parameters, and wherein the control circuitry is further configured to:
combine the locally updated statistical model (22) with the externally updated statistical model (23) in order to form a combined statistical model; and
compare the baseline statistical model (21) with combined statistical model.

10. The system (10) according to claim 8 or 9, wherein the obtained externally updated set of model parameters comprise a number of samples used to generate the externally updated set of model parameters.

11. The system (10) according to any one of claims 8 - 10, wherein the control circuitry (11) is further configured to:
a signal indicative of the locally updated set of model parameters to at least one external vehicle.

12. The system (10) according to any one of claims 8 - 11, wherein the control circuitry (11) is configured to control the ADS in response to the determination that the baseline statistical model (21) is invalid by performing at least one of:
generating a signal indicative of a hand-over request at a Human Machine Interface, HMI, of the ground vehicle;
executing a Minimal Risk Condition, MRC, manoeuvre; and
inhibiting, at least temporarily, further activation of the ADS within a geographical area comprised in the ODD.

13. A ground vehicle (1) comprising:
an Automated Driving System, ADS, comprising a scenario identifier module configured to monitor scenarios in a surrounding environment of the ground vehicle;
a perception system (6) comprising at least one sensor (6a, 6b, 6c) configured to monitor a surrounding environment of the ground vehicle (1);
a localization system (5) configured to monitor a geographical map position of the ground vehicle;
a system (10) for managing the ADS according to any one of claims 8 - 12.

## Patentansprüche

1. Verfahren (100) zum Verwalten eines automatisierten Fahrsystems, ADS, eines Bodenfahrzeugs, wobei das ADS ein Szenario-Identifizierungsmodul umfasst, das dazu konfiguriert ist, Szenarien in einer umliegenden Umgebung des Bodenfahrzeugs innerhalb einer Operational Design Domain, ODD, des ADS zu überwachen, wobei die ODD mit einem statistischen Basismodell verknüpft ist, das eine statistische Verteilung angibt, die sich auf eine Vielzahl von Szenarien bezieht, die mittels des Szenario-Identifizierungsmoduls erkennbar sind, wobei das Verfahren Folgendes umfasst:
Erhalten (101) von Sensordaten, die Informationen über eine umliegende Umgebung des Bodenfahrzeugs umfassen;
Erkennen (102), mittels des Szenario-Identifizierungsmoduls, eines Szenarios in der umliegenden Umgebung basierend auf den erhaltenen Sensordaten und Extrahieren eines Satzes von Szenarioparametern, die das erkannte Szenario angeben;
lokales Aktualisieren (103) eines Satzes von Modellparametern des statistischen Basismodells basierend auf dem extrahierten Satz von Szenarioparametern, um ein lokal aktualisiertes statistisches Modell zu erhalten, wobei der lokal aktualisierte Satz von Modellparametern eine statistische Verteilung angibt, die mit dem erkannten Szenario verknüpft ist;
Erhalten (104), von einem externen Bodenfahrzeug, eines extern aktualisierten Satzes von Modellparametern des statistischen Basismodells, wobei die extern aktualisierten Modellparameter eine statistische Verteilung angeben, die mit einem extern erkannten Szenario verknüpft ist;
Vergleichen (108) des statistischen Basismodells mit dem lokal aktualisierten statistischen Modell und mit dem extern aktualisierten Satz von Modellparametern;
Bestimmen (109), ob eine Abweichung über einem Schwellenwert vorliegt, basierend auf dem Vergleich; und
bei Bestimmen der Abweichung über dem Schwellenwert, Bestimmen (110), dass das statistische Basismodell für die ODD zumindest vorübergehend ungültig ist, und Steuern des ADS als Reaktion auf die Bestimmung, dass das statistische Basismodell ungültig ist.

2. Verfahren (100) nach Anspruch 1, wobei der Schritt von Erhalten eines extern aktualisierten Satzes von Modellparametern Erhalten eines extern aktualisierten statistischen Modells umfasst, das den extern aktualisierten Satz von Modellparametern umfasst;
wobei das Verfahren ferner Folgendes umfasst:
Kombinieren (107) des lokal aktualisierten statistischen Modells mit dem extern aktualisierten statistischen Modell, um ein kombiniertes statistisches Modell zu bilden; und
wobei der Schritt von Vergleichen das statistische Basismodell mit kombiniertem statistischen Modell umfasst.

3. Verfahren (100) nach einem der vorhergehenden Ansprüche, wobei der erhaltene extern aktualisierte Satz von Modellparametern eine Anzahl von Stichproben umfasst, die verwendet werden, um den extern aktualisierten Satz von Modellparametern zu erzeugen.

4. Verfahren (100) nach Anspruch einem der vorhergehenden Ansprüche, ferner umfassend:
Übertragen (111) eines Signals, das den lokal aktualisierten Satz von Modellparametern angibt, an zumindest ein externes Fahrzeug.

5. Verfahren (100) nach einem der vorhergehenden Ansprüche, ferner umfassend:
Übertragen (111) eines Signals, das die bestimmte Abweichung über dem Schwellenwert angibt, an zumindest ein externes Fahrzeug; oder
Übertragen (111) eines Signals, das die Bestimmung angibt, dass das statistische Basismodell für die ODD zumindest vorübergehend ungültig ist, an zumindest ein externes Fahrzeug.

6. Verfahren (100) nach einem der vorhergehenden Ansprüche, wobei das Steuern des ADS als Reaktion auf die Bestimmung, dass das statistische Basismodell ungültig ist, mindestens eines der Folgenden umfasst:
Erzeugen eines Signals, das eine Übergabeanforderung an einer Mensch-Maschine-Schnittstelle, HMI, des Bodenfahrzeugs angibt;
Ausführen eines Manövers mit minimalem Risiko, MRC-Manövers; und
Verhindern, zumindest vorübergehend, einer weiteren Aktivierung des ADS innerhalb eines geografischen Gebiets, das in der ODD umfasst ist.

7. Computerlesbares Speichermedium, das ein oder mehrere Programme speichert, die dazu konfiguriert sind, durch einen oder mehrere Prozessoren eines Fahrzeugsteuersystems ausgeführt zu werden, wobei das eine oder die mehreren Programme Anweisungen zum Durchführen des Verfahrens nach einem der vorhergehenden Ansprüche umfassen.

8. System (10) zum Verwalten eines automatisierten Fahrsystems, ADS, eines Bodenfahrzeugs (1), wobei das ADS ein Szenario-Identifizierungsmodul umfasst, das dazu konfiguriert ist, Szenarien in einer umliegenden Umgebung des Bodenfahrzeugs innerhalb einer Operational Design Domain, ODD, des ADS zu überwachen, wobei die ODD mit einem statistischen Basismodell (21) verknüpft ist, das eine statistische Verteilung angibt, die sich auf eine Vielzahl von Szenarien bezieht, die mittels des Szenario-Identifizierungsmoduls erkennbar sind, wobei das System Folgendes umfasst:
einen Speicher (12), umfassend das statistische Basismodell;
eine Steuerschaltung (11), die zu Folgendem konfiguriert ist:
Erhalten von Sensordaten, die Informationen über eine umliegende Umgebung des Bodenfahrzeugs (1) umfassen;
Erkennen, mittels des Szenario-Identifizierungsmoduls, eines Szenarios in der umliegenden Umgebung basierend auf den erhaltenen Sensordaten und Extrahieren eines Satzes von Szenarioparametern, die das erkannte Szenario angeben;
lokales Aktualisieren eines Satzes von Modellparametern des statistischen Basismodells basierend auf dem extrahierten Satz von Szenarioparametern, um ein lokal aktualisiertes statistisches Modell (22) zu erhalten, wobei der lokal aktualisierte Satz von Modellparametern eine statistische Verteilung angibt, die mit dem erkannten Szenario verknüpft ist;
Erhalten, von einem externen Bodenfahrzeug (2), eines extern aktualisierten Satzes von Modellparametern des statistischen Basismodells, wobei die extern aktualisierten Modellparameter eine statistische Verteilung angeben, die mit einem extern erkannten Szenario verknüpft ist;
Vergleichen des statistischen Basismodells (21) mit dem lokal aktualisierten statistischen Modell (22) und mit dem extern aktualisierten Satz von Modellparametern;
Bestimmen, ob eine Abweichung über einem Schwellenwert vorliegt, basierend auf dem Vergleich; und
bei Erkennung der Abweichung über dem Schwellenwert, Bestimmen, dass das statistische Basismodell (21) für die ODD zumindest vorübergehend ungültig ist, und Erzeugen eines Signals, um das ADS als Reaktion auf die Bestimmung, dass das statistische Basismodell ungültig ist, zu steuern.

9. System (10) nach Anspruch 8, wobei die Steuerschaltung (11) dazu konfiguriert ist, ein extern aktualisiertes statistisches Modell (23) zu erhalten, das den extern aktualisierten Satz von Modellparametern umfasst, und wobei die Steuerschaltung ferner zu Folgendem konfiguriert ist:
Kombinieren des lokal aktualisierten statistischen Modells (22) mit dem extern aktualisierten statistischen Modell (23), um ein kombiniertes statistisches Modell zu bilden; und
Vergleichen des statistischen Basismodells (21) mit kombiniertem statistischen Modell.

10. System (10) nach Anspruch 8 oder 9, wobei der erhaltene extern aktualisierte Satz von Modellparametern eine Anzahl von Stichproben umfasst, die verwendet werden, um den extern aktualisierten Satz von Modellparametern zu erzeugen.

11. System (10) nach einem der Ansprüche 8-10, wobei die Steuerschaltung (11) ferner zu Folgendem konfiguriert ist:
eines Signals, das den lokal aktualisierten Satz von Modellparametern angibt, an zumindest ein externes Fahrzeug.

12. System (10) nach einem der Ansprüche 8-11, wobei die Steuerschaltung (11) dazu konfiguriert ist, das ADS als Reaktion auf die Bestimmung, dass das statistische Basismodell (21) ungültig ist, zu steuern, indem sie mindestens eines der Folgenden ausführt:
Erzeugen eines Signals, das eine Übergabeanforderung an einer Mensch-Maschine-Schnittstelle, HMI, des Bodenfahrzeugs angibt;
Ausführen eines Manövers mit minimalem Risiko, MRC-Manövers; und
Verhindern, zumindest vorübergehend, einer weiteren Aktivierung des ADS innerhalb eines geografischen Gebiets, das in der ODD umfasst ist.

13. Bodenfahrzeug (1), umfassend:
ein automatisiertes Fahrsystem, ADS, das ein Szenario-Identifizierungsmodul umfasst, das dazu konfiguriert ist, Szenarien in einer umliegenden Umgebung des Bodenfahrzeugs zu überwachen;
ein Wahrnehmungssystem (6), umfassend mindestens einen Sensor (6a, 6b, 6c), der dazu konfiguriert ist, eine umliegende Umgebung des Bodenfahrzeugs (1) zu überwachen;
ein Lokalisierungssystem (5), das dazu konfiguriert ist, eine geografische Kartenposition des Bodenfahrzeugs zu überwachen;
ein System (10) zum Verwalten des ADS nach einem der Ansprüche 8-12.

## Revendications

1. Procédé (100) de gestion d'un système de conduite automatisé, ADS, d'un véhicule terrestre, dans lequel l'ADS comprend un module d'identification de scénario configuré pour surveiller des scénarios dans l'environnement environnant du véhicule terrestre au sein d'un domaine de conception opérationnelle, ODD, de l'ADS, dans lequel l'ODD est associé à un modèle statistique de référence indiquant une distribution statistique relative à une pluralité de scénarios détectables au moyen du module d'identification de scénario, le procédé comprenant :
l'obtention (101) de données de capteur comprenant des informations sur un environnement environnant du véhicule terrestre ;
la détection (102), au moyen du module d'identification de scénario, d'un scénario dans l'environnement environnant sur la base des données de capteur obtenues et l'extraction d'un ensemble de paramètres de scénario indicatifs du scénario détecté ;
la mise à jour locale (103) d'un ensemble de paramètres de modèle du modèle statistique de base sur la base de l'ensemble extrait de paramètres de scénario afin d'obtenir un modèle statistique mis à jour localement, l'ensemble mis à jour localement de paramètres de modèle étant indicatif d'une distribution statistique associée au scénario détecté ;
l'obtention (104), à partir d'un véhicule terrestre externe, d'un ensemble de paramètres de modèle mis à jour de manière externe du modèle statistique de base, les paramètres de modèle mis à jour de manière externe étant indicatifs d'une distribution statistique associée à un scénario détecté de manière externe ;
la comparaison (108) du modèle statistique de base avec le modèle statistique mis à jour localement et avec l'ensemble de paramètres de modèle mis à jour de manière externe ;
la détermination (109) si un écart au-dessus d'un seuil est présent sur la base de la comparaison ; et
lors de la détermination de l'écart au-dessus du seuil, la détermination (110) que le modèle statistique de base pour l'ODD est au moins temporairement invalide et la commande de l'ADS en réponse à la détermination que le modèle statistique de base est invalide.

2. Procédé (100) selon la revendication 1, dans lequel l'étape d'obtention d'un ensemble de paramètres de modèle mis à jour de manière externe comprend l'obtention d'un modèle statistique mis à jour de manière externe comprenant l'ensemble de paramètres de modèle mis à jour de manière externe ;
dans lequel le procédé comprend en outre :
la combinaison (107) du modèle statistique mis à jour localement avec le modèle statistique mis à jour de manière externe afin de former un modèle statistique combiné ; et
dans lequel l'étape de comparaison comprend le modèle statistique de base avec le modèle statistique combiné.

3. Procédé (100) selon l'une quelconque des revendications précédentes, dans lequel l'ensemble de paramètres de modèle mis à jour de manière externe obtenu comprend un certain nombre d'échantillons utilisés pour générer l'ensemble de paramètres de modèle mis à jour de manière externe.

4. Procédé (100) selon l'une quelconque des revendications précédentes, comprenant en outre :
la transmission (111) d'un signal indicatif de l'ensemble de paramètres de modèle mis à jour localement à au moins un véhicule externe.

5. Procédé (100) selon l'une quelconque des revendications précédentes, comprenant en outre :
la transmission (111) d'un signal indiquant l'écart déterminé au-dessus du seuil à au moins un véhicule externe ; ou
la transmission (111) d'un signal indiquant la détermination selon laquelle le modèle statistique de base pour l'ODD est au moins temporairement invalide à au moins un véhicule externe.

6. Procédé (100) selon l'une quelconque des revendications précédentes, dans lequel la commande de l'ADS en réponse à la détermination que le modèle statistique de base est invalide comprend au moins l'un des éléments suivants :
la génération d'un signal indiquant une demande de transfert au niveau d'une interface homme-machine, HMI, du véhicule terrestre ;
l'exécution d'une manœuvre de condition de risque minimal, MRC ; et
l'inhibition, au moins temporairement, de toute activation ultérieure de l'ADS dans une zone géographique comprise dans l' ODD.

7. Support de stockage lisible par ordinateur stockant un ou plusieurs programmes configurés pour être exécutés par un ou plusieurs processeurs d'un système de commande de véhicule, les un ou plusieurs programmes comprenant des instructions pour réaliser le procédé selon l'une quelconque des revendications précédentes.

8. Système (10) de gestion d'un système de conduite automatisé, ADS, d'un véhicule terrestre (1), dans lequel l'ADS comprend un module d'identification de scénario configuré pour surveiller des scénarios dans l'environnement environnant du véhicule terrestre au sein d'un domaine de conception opérationnelle, ODD, de l'ADS, dans lequel l'ODD est associé à un modèle statistique de référence (21) indiquant une distribution statistique relative à une pluralité de scénarios détectables au moyen du module d'identification de scénario, le système comprenant :
une mémoire (12) comprenant le modèle statistique de base ;
un circuit de commande (11) configuré pour :
obtenir des données de capteur comprenant des informations sur l'environnement environnant du véhicule terrestre (1) ;
détecter, au moyen du module d'identification de scénario, un scénario dans l'environnement environnant sur la base des données de capteur obtenues et extraire un ensemble de paramètres de scénario indicatifs du scénario détecté ;
mettre à jour localement un ensemble de paramètres de modèle du modèle statistique de référence sur la base de l'ensemble extrait de paramètres de scénario afin d'obtenir un modèle statistique mis à jour localement (22), l'ensemble mis à jour localement de paramètres de modèle étant indicatif d'une distribution statistique associée au scénario détecté ;
obtenir, à partir d'un véhicule terrestre externe (2), un ensemble de paramètres de modèle mis à jour de manière externe du modèle statistique de base, les paramètres de modèle mis à jour de manière externe étant indicatifs d'une distribution statistique associée à un scénario détecté de manière externe ;
comparer le modèle statistique de base (21) avec le modèle statistique mis à jour localement (22) et avec l'ensemble de paramètres de modèles mis à jour de manière externe ;
déterminer si un écart au-dessus d'un seuil est présent sur la base de la comparaison ; et
lors de la détection de l'écart au-dessus du seuil, déterminer que le modèle statistique de base (21) pour l'ODD est au moins temporairement invalide et générer un signal afin de commander l'ADS en réponse à la détermination que le modèle statistique de base est invalide.

9. Système (10) selon la revendication 8, dans lequel le circuit de commande (11) est configuré pour obtenir un modèle statistique (23) mis à jour de manière externe comprenant l'ensemble de paramètres de modèle mis à jour de manière externe, et dans lequel le circuit de commande est en outre configuré pour :
combiner le modèle statistique mis à jour localement (22) avec le modèle statistique mis à jour de manière externe (23) afin de former un modèle statistique combiné ; et
comparer le modèle statistique de base (21) avec le modèle statistique combiné.

10. Système (10) selon la revendication 8 ou 9, dans lequel l'ensemble de paramètres de modèle mis à jour de manière externe obtenu comprend un certain nombre d'échantillons utilisés pour générer l'ensemble de paramètres de modèle mis à jour de manière externe.

11. Système (10) selon l'une quelconque des revendications 8 à 10, dans lequel le circuit de commande (11) est en outre configuré pour :
un signal indiquant l'ensemble de paramètres de modèle mis à jour localement vers au moins un véhicule externe.

12. Système (10) selon l'une quelconque des revendications 8 à 11, dans lequel le circuit de commande (11) est configuré pour commander l'ADS en réponse à la détermination que le modèle statistique de base (21) est invalide en effectuant au moins l'une des opérations suivantes :
la génération d'un signal indiquant une demande de transfert au niveau d'une interface homme-machine, HMI, du véhicule terrestre ;
l'exécution d'une manœuvre de condition de risque minimal, MRC ; et
l'inhibition, au moins temporairement, de toute activation ultérieure de l'ADS dans une zone géographique comprise dans l'ODD.

13. Véhicule terrestre (1) comprenant :
un système de conduite automatisé, ADS, comprenant un module d'identification de scénario configuré pour surveiller des scénarios dans un environnement environnant du véhicule terrestre ;
un système de perception (6) comprenant au moins un capteur (6a, 6b, 6c) configuré pour surveiller un environnement environnant du véhicule terrestre (1) ;
un système de localisation (5) configuré pour surveiller une position cartographique géographique du véhicule terrestre ;
un système (10) de gestion de l'ADS selon l'une quelconque des revendications 8 à 12.
